# EUROPEAN PATENT APPLICATION

(11) **EP 2 923 618 A1**
(43) Date of publication of application: **30.09.2015**
(21) Application number: 15151617.6
(22) Date of filing: 19.01.2015
(51) Int. Cl.: A47J 36/00, C22C 38/02, C22C 38/04, C22C 38/08, C22C 38/18, C22C 38/20, C22C 38/22, C23D 5/00

(54) **Enameled container and method for manufacturing same**

(30) Priority: 28.02.2014 JP 2014039626
(71) Applicant: Niigata Investment Casting Co., Ltd., Niigata (JP)
(72) Inventor: Sato, Tsuyoshi, Niigata (JP)
(74) Representative: Hoffmann Eitle

(57) **Abstract**

An object of the present invention is to provide an innovative enameled container having extremely high commercial value and a method for manufacturing the enameled container. The enameled container has an enamel layer 2 formed on a surface la of a container-shaped article 1 made of a stainless material described in (a) below:
(a) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

## Description

### FIELD OF THE INVENTION

The present invention relates to an enameled container, such as a pan or tableware, and a method for manufacturing the enameled container.

### BACKGROUND OF THE INVENTION

There has been a proposed, for use as a pan, tableware, or other article, an enameled container in which an enamel layer is formed on the surface of a container-shaped article, such as that disclosed in Japanese Patent Laid-Open No. 2001-104162 (hereinafter referred to as related art example).

The related art example relates to formation of an enamel layer by applying a glass-based glaze primarily containing silica onto the surface of a container-shaped article made of iron and baking the resultant structure in a heat treatment apparatus, the enamel layer improving durability and the degree of high value of the enameled container.

In the related art example, when the glazed container-shaped article is placed in a heat treatment apparatus for a baking process, the container-shaped article is mounted on a mount in the heat treatment apparatus, for example, with the container-shaped article turned upside down. In this case, no enamel layer is formed on part of the opening edge of the container-shaped article that comes into contact with the mount, but the metal is undesirably exposed. This is because the glaze, on having been applied to the opening edge, undesirably adheres to the mount with which the opening edge of the container-shaped article comes into contact. To minimize the area of the exposed metal portion of the opening edge of the container-shaped article, the mount is designed to have a shape that achieves, for example, point contact, but part of the opening edge of the container-shaped article inevitably has an exposed metal portion.

Therefore, in the related art, since the exposed metal portion, where no enamel layer is formed, rusts if no measures are taken, an antirust material is applied to the exposed metal portion. However, the antirust material comes off in the course of continuous use, and the exposed metal portion eventually rusts. Further, even in a portion where the enamel layer is formed, the enamel layer is undesirably worn and shaved and the metal is exposed and rusts.

The present invention solves the problems described above and provides an innovative enameled container having an extremely high commercial value and a method for manufacturing the enameled container.

### SUMMARY OF THE INVENTION

A summary of the present invention will be described with reference to the accompanying drawings.

A first aspect of the present invention relates to an enameled container characterized in that an enamel layer 2 is formed on a surface 1a of a container-shaped article 1 made of a stainless material described in (a) below:
(a) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

A second aspect of the present invention relates to an enameled container according to the first aspect, the enameled container may be characterized in that the enameled container is provided with a lid, and the container-shaped article 1 has the enamel layer 2 formed in a portion elsewhere besides an opening edge 1b with which a lower circumferential edge of the lid comes into contact and which the lower circumferential edge overlies.

A third aspect of the present invention relates to an enameled container according to the second aspect, the enameled container may be characterized in that the lid is an enameled lid produced by forming an enamel layer 5 on a surface 3a of a lid-shaped article 3 made of a stainless material described in (b) below:
(b) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

A fourth aspect of the present invention relates to an enameled container according to the third aspect, the enameled container may be characterized in that the lid-shaped article 3 has the enamel layer 5 formed in a portion elsewhere besides a lower circumferential edge 3b that comes into contact with and overlies the opening edge 1b of the container-shaped article 1.

A fifth aspect of the present invention relates to an enameled container according to any one of the first to fourth aspects, the enameled container may be characterized in that the surface 1a of the container-shaped article 1 is blasted.

A sixth aspect of the present invention relates to an enameled container according to any one of the third and fourth aspects, the enameled container may be characterized in that the surface 3a of the lid-shaped article 3 is blasted.

A seventh aspect of the present invention relates to a method for manufacturing an enameled container in which a lid is provided and an enamel layer 2 is formed on a surface 1a of a container-shaped article 1 made of a stainless material described in (c) below, the method comprising: masking an opening edge 1b of the container-shaped article 1 with which a lower circumferential edge of the lid comes into contact and which the lower circumferential edge overlies and applying a glaze 4 by using appropriate means; and subsequently baking the container-shaped article 1 onto which the glaze 4 has been applied and which is supported at the masked portion to form an enamel layer 2 on the surface 1a of the container-shaped article 1 elsewhere besides the opening edge 1b thereof:
(c) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

An eighth aspect of the present invention relates to an enameled container according to the seventh aspect, the method for manufacturing an enameled container may be characterized in that the lid has an enamel layer 5 formed on a surface 3a of a lid-shaped article 3 made of a stainless material described in (d) below in a method described in (e) below:
(d) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.
(e) masking a circumferential edge 3b of the lid-shaped article 3 that comes into contact with the opening edge 1b of the container-shaped article 1 and overlies the opening edge 1b and applying a glaze 4 by using appropriate means; and subsequently baking the lid-shaped article 3 onto which the glaze 4 has been applied and which is supported at the masked portion to form an enamel layer 5 on the surface 3a of the lid-shaped article 3 elsewhere besides the circumferential edge 3b thereof.

The present invention configured as described above provides an innovative enameled container that has an extremely high commercial value, for example, is unlikely to rust and excels in durability even if the container-shaped article has an exposed metal portion, as compared with the related art example described above.

### BRIEF DESCRIPTION OF THE DRAWINGS

FIG. 1 is a cross-sectional view showing an example of the present invention;

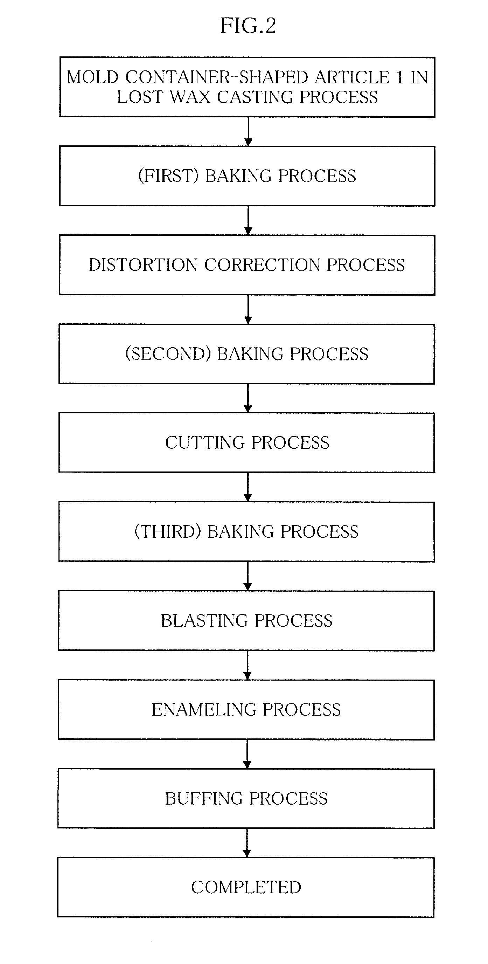

FIG. 2 is a descriptive diagram of manufacturing steps of the present example; and
FIG. 3 is a descriptive diagram of a manufacturing method of the present example.

### DETAILED DESCRIPTION OF THE INVENTION

A preferred embodiment of the present invention will be briefly described by showing an advantageous effect of the present invention with reference to the drawings.

In the present invention, an enamel layer 2 is formed on a surface 1a of a container-shaped article 1 made of stainless material having the composition described above.

Therefore, for example, even when an exposed metal portion in which no enamel layer 2 is formed is present or the enamel layer 2 is shaved due to wear in the course of continuous use and an exposed metal potion appears, the exposed metal portion is unlikely to rust but excels in durability because the container-shaped article 1 is made of the stainless material described above.

To form the container-shaped article 1 with a stainless material, the inventor has attempted to use various existing stainless materials, such as SCS13 (SUS304 equivalent), SCS14 (SUS316 equivalent), and SCS16 (SUS316L equivalent) and found that cracks, blisters, and fish-scaling that make the enamel layer 2 inappropriate for practical use (as enameled container, such as pans and tableware) are undesirably formed in the enamel layer 2 formed on the container-shaped article 1.

To address the problem, the inventor has intensively conducted a variety of experiments and studies on the stainless material of which the container-shaped article 1 is made and developed a stainless material that is described in (a) below and unlikely to cause cracks, blisters, or fish-scaling to be formed in the enamel layer 2:
(a) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

The inventor has actually formed the enamel layer 2 on the container-shaped article 1 made of the stainless material according to the present invention and ascertained that cracks, blisters, or fish-scaling are unlikely to be formed in the enamel layer 2 and the enamel layer 2 is therefore suitable for practical use.

The reason why cracking is suppressed conceivably relates to the coefficient of thermal expansion according to which a material expands when heated. The coefficient of thermal expansion of the stainless material according to the present invention is lower than that for each of the existing stainless materials described above. It is therefore believed that the formation of cracks in the enamel layer 2 formed on the container-shaped article 1 according to the present invention is suppressed.

Further, the reason why the formation of blisters and fish-scaling is suppressed conceivably relates to hydrogen produced when a material is heated. The stainless material according to the present invention produces a smaller amount of hydrogen than the existing stainless materials described above. It is therefore believed that the formation of blisters and fish-scaling in the enamel layer 2 formed on the container-shaped article 1 according to the present invention is suppressed.

### Example

A specific example of the present invention will be described with reference to the drawings.

The present example relates to an enameled container in which the enamel layer 2 is formed on the surface 1a of the container-shaped article 1, which is made of a metal.

In the present example, a pan provided with an enameled lid (described later) is employed as the enameled container, but a dish, a deep bowl, or any other article of tableware that has a configuration that achieves the feature of the present example may be employed as appropriate.

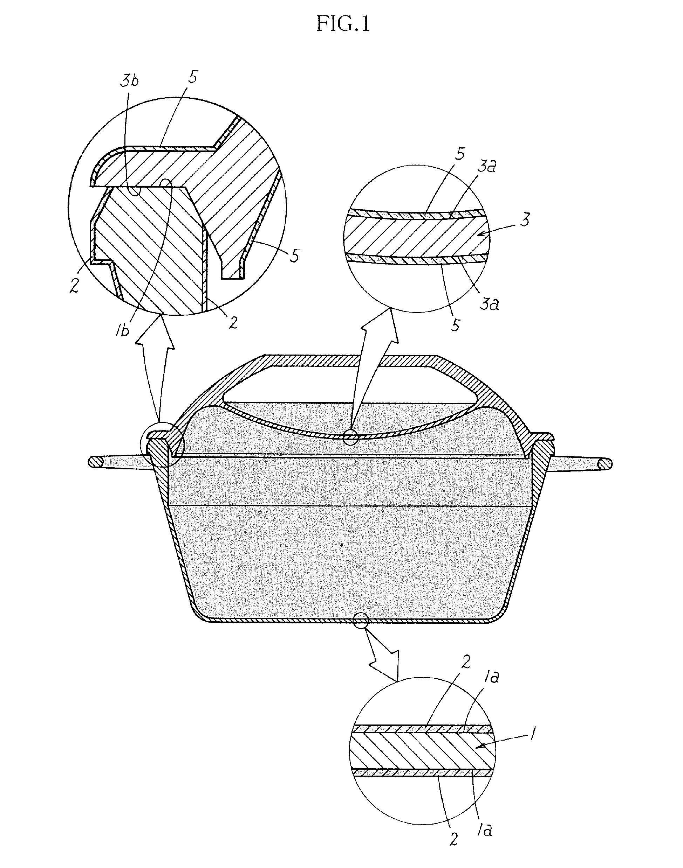

Specifically, the enameled container is so configured that the stainless material described below in (b) is integrally molded through lost wax casting to provide the container-shaped article 1 and the enamel layer 2, which will be described later, is formed on the surface 1a (outer and inner surfaces) of the container-shaped article 1, as shown in FIG. 1. In the present example, handles 1c are provided.
(b) a stainless material containing 0.06 wt% of carbon (C), 0.52 wt% of silicon (Si), 0.72 wt% of manganese (Mn), 0.011 wt% of phosphorus (P), 0.005 wt% of sulfur (S), 18.42 wt% of chromium (Cr), 1.38 wt% of molybdenum (Mo), 0.062 wt% of nickel (Ni), 0.026 wt% of copper (Cu), and 50 wt% or more of iron (Fe), which corresponds to the remaining proportion.

The inventor has ascertained that the enamel layer 2 actually formed on the container-shaped article 1 made of the stainless material described above is unlikely to cause cracks, blisters, or fish-scaling to be formed in the enamel layer 2 and the resultant enameled container is therefore suitable for practical use. The inventor has further ascertained that the stainless material described in (c) below may be used to achieve an enameled container suitable for practical use:
(c) a stainless material containing 50 wt% or more of iron (Fe), 0.01 wt% or more but 0.1 wt% or less of carbon (C), 0.01 wt% or more but 1.05 wt% or less of silicon (Si), 0.01 wt% or more but 1.05 wt% or less of manganese (Mn), 0.001 wt% or more but 0.04 wt% or less of phosphorus (P), 0.001 wt% or more but 0.04 wt% or less of sulfur (S), 16 wt% or more but 20 wt% or less of chromium (Cr), 0.01 wt% or more but 1.5 wt% or less of molybdenum (Mo), 0.001 wt% or more but 0.15 wt% or less of nickel (Ni), and 0.001 wt% or more but 0.15 wt% or less of copper (Cu).

The inventor has still further ascertained that the stainless material described above is unlikely to rust in a salt spray test using a salt spray tester as in the case of the existing stainless materials.

The enameled lid is so configured that the stainless material described above is integrally molded in a casting process (lost wax casting) to provide a lid-shaped article 3 and an enamel layer 5 is formed on a surface 3a (outer and inner surfaces) of the lid-shaped article 3, as shown in FIG. 1, as in the case of the container-shaped article 1 described above.

In the present example, the container-shaped article 1 and the lid-shaped article 3 are produced through lost wax casting but are not necessarily produced this way; sand mold casting, investment casting, or any other types of casting that achieve the feature of the present example can be employed as appropriate. The container-shaped article 1 and the lid-shaped article 3 may still instead be produced in a forging process.

A description will be made of steps of manufacturing the enameled container according to the present example. In the present example, steps of manufacturing the enameled container are described, and the enameled lid is also manufactured in the same manufacturing steps. That is, the lid-shaped article 3 produced in the lost wax casting process undergoes pre-processes and an enameling process that will be described later, and a lower circumferential edge 3b of the lid-shaped article 3 is masked with a masking material in the enameling process (in application of glaze 4, followed by baking).

Specifically, the container-shaped article 1 is integrally molded by shaping the stainless material described above through lost wax casting, and then the pre-processes are performed on the container-shaped article 1, followed by the enameling process.

A description will first be made of the pre-processes performed on the container-shaped article 1.

First, the container-shaped article 1 is placed in a heat treatment apparatus 10 and subjected to a first baking process at a temperature of from 800 to 900°C (the material is so heated to a temperature higher than or equal to 800°C but lower than or equal to 850°C) for 10 to 20 minutes. In the first backing process, the material is softened in preparation for a distortion correcting process that follows the first baking process.

Subsequently, the container-shaped article 1 having undergone the first baking process is allowed to undergo a distortion correction process based on press working. In the distortion correction process, any distortion of the container-shaped article 1 having been integrally molded in the lost wax casting process is corrected, for example, by reshaping the opening of the container-shaped article 1 into a complete round.

Subsequently, the container-shaped article 1 having undergone the distortion correction process is placed in the heat treatment apparatus 10 and allowed to undergo a second baking process at a temperature ranging from 800 to 900°C (the material is so heated to a temperature higher than or equal to 800°C but lower than or equal to 850°C) for 10 to 20 minutes. In the second baking process, stress produced in the distortion correction process and left in the container-shaped article 1 is removed.

Subsequently, the container-shaped article 1 having undergone the second baking process is allowed to undergo a cutting process. In the cutting process, an opening edge 1b of the container-shaped article 1 (surface that the lower circumferential edge 3b of the lid-shaped article 3 overlies) is flattened.

Subsequently, the container-shaped article 1 having undergone the cutting process is placed in the heat treatment apparatus 10 and allowed to undergo a third baking process at 700°C (the material is so heated to a temperature higher than or equal to 600°C but lower than or equal to 850°C) for 10 to 20 minutes. The third baking process is what is called post-baking for removing oil components having adhered to the surface 1a of the container-shaped article 1 in the cutting process.

Subsequently, the container-shaped article 1 having undergone the third baking process is subjected to blasting. In the blasting process, abrasive grains are sprayed onto the surface 1a of the container-shaped article 1 to completely remove the oil components having adhered thereto in the cutting process and roughen the surface 1a of the container-shaped article 1 into a rough surface to achieve satisfactory fixation between the surface 1a and the enamel layer 2. The blasting process may be replaced with a wet blasting process in which abrasive grains and a liquid are sprayed with the aid of compressed air.

The enameling process performed on the container-shaped article 1 having undergone the pre-processes described above will be described.

A glaze 4 is first applied onto the surface 1a of the container-shaped article 1.

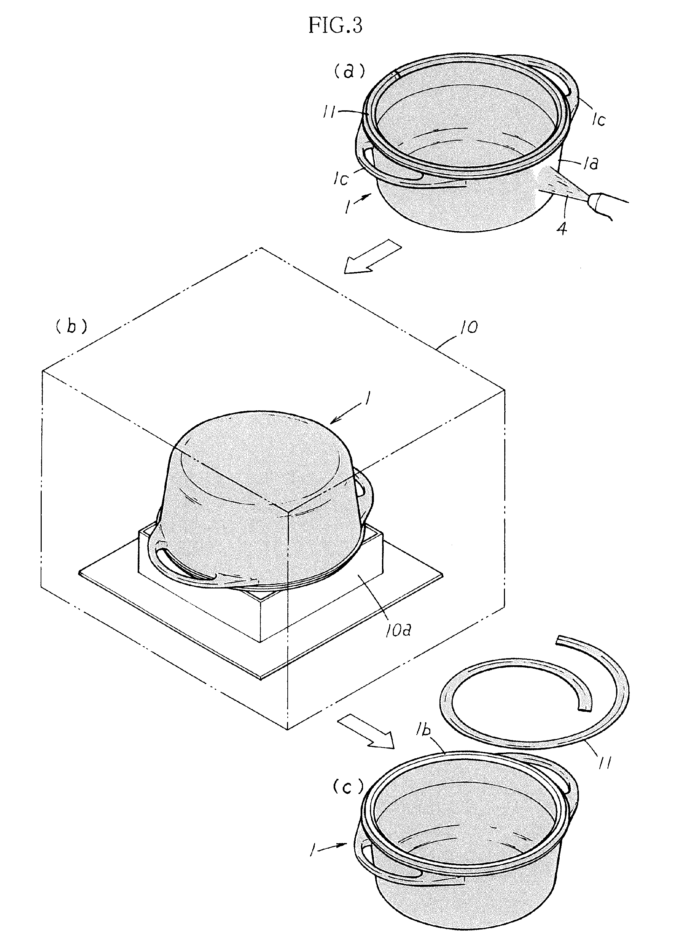

Specifically, the glaze 4 is a combination of glass, clay, an inorganic pigment, an inorganic chemical, and water and is sprayed onto the container-shaped article 1 (see FIG. 3(a)). Before the glaze 4 is sprayed, a masking material 11 is attached in advance to the opening edge 1b of the container-shaped article 1.

Subsequently, the container-shaped article 1 onto which the glaze 4 has been sprayed is placed in the heat treatment apparatus 10 and so mounted on a rectangularly tubular mount 10a in the heat treatment apparatus 10 that the container-shaped article 1 is turned upside down and supported at the masked portion and baked at a temperature ranging from 800 to 900°C for 10 to 20 minutes, followed by a step of further spraying the glaze 4 and baking the container-shaped article 1 once or twice (see FIG. 3(b)).

Subsequently, the masking material 11 is peeled off, and the enameled container is thus completed (see FIG. 3(c)). The opening edge 1b of the container-shaped article 1 is allowed to undergo a buffing process (flattering process) as required.

In the present example configured as described above, for example, even when an exposed metal portion in which no enamel layer 2 is formed is present or the enamel layer 2 is shaved due to wear in the course of continuous use and an exposed metal potion appears, the exposed metal portion is unlikely to rust but excels in durability because the container-shaped article 1 is made of a stainless material that is unlikely to rust.

Further, in the present example, in which the enamel layers 2 and 5 are formed in the portions elsewhere besides the opening edge 1b of the container-shaped article 1 and the lower circumferential edge 3b of the lid-shaped article 3, unlike the related art, in which the enamel layers 2 and 5 are formed on the opening edge 1b of the container-shaped article 1 and the lower circumferential edge 3b of the lid-shaped article 3 and slight irregularities of the enamel layers 2 and 5 degrade sealing performance, excellent sealing performance is achieved because no enamel layer 2 or 5 is formed on the opening edge 1b of the container-shaped article 1 or the lower circumferential edge 3b of the lid-shaped article 3 and flattened surface contact is achieved.

The present invention is not limited to the present example but the specific configuration of each of the components can be designed as appropriate.

## Claims

1. An enameled container **characterized in that** an enamel layer is formed on a surface of a container-shaped article made of a stainless material described in (a) below:
(a) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

2. The enameled container according to claim 1, **characterized in that** the enameled container is provided with a lid, and the container-shaped article has the enamel layer formed in a portion elsewhere besides an opening edge with which a lower circumferential edge of the lid comes into contact and which the lower circumferential edge overlies.

3. The enameled container according to claim 2, **characterized in that** the lid is an enameled lid produced by forming an enamel layer on a surface of a lid-shaped article made of a stainless material described in (b) below:
(b) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

4. The enameled container according to claim 3, **characterized in that** the lid-shaped article has the enamel layer formed in a portion elsewhere besides a lower circumferential edge that comes into contact with and overlies the opening edge of the container-shaped article.

5. The enameled container according to any one of claims 1 to 4, **characterized in that** the surface of the container-shaped article is blasted.

6. The enameled container according to any one of claims 3 and 4, **characterized in that** the surface of the lid-shaped article is blasted.

7. A method for manufacturing an enameled container in which a lid is provided and an enamel layer is formed on a surface of a container-shaped article made of a stainless material described in (c) below, the method comprising: masking an opening edge of the container-shaped article with which a lower circumferential edge of the lid comes into contact and which the lower circumferential edge overlies and applying a glaze by using appropriate means; and subsequently baking the container-shaped article onto which the glaze has been applied and which is supported at the masked portion to form an enamel layer on the surface of the container-shaped article elsewhere besides the opening edge thereof:
(c) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.

8. The method for manufacturing an enameled container according to claim 7, **characterized in that** the lid has an enamel layer formed on a surface of a lid-shaped article made of a stainless material described in (d) below in a method described in (e) below:
(d) a stainless material containing 50 wt% or more of iron, 0.1 wt% or less of carbon, 1.05 wt% or less of silicon, 1.05 wt% or less of manganese, 0.04 wt% or less of phosphorus, 0.04 wt% or less of sulfur, 16 wt% or more but 20 wt% or less of chromium, 1.5 wt% or less of molybdenum, 0.15 wt% or less of nickel, and 0.15 wt% or less of copper.
(e) masking a circumferential edge of the lid-shaped article that comes into contact with the opening edge of the container-shaped article and overlies the opening edge and applying a glaze by using appropriate means; and subsequently baking the lid-shaped member onto which the glaze has been applied and which is supported at the masked portion to form an enamel layer on the surface of the lid-shaped article elsewhere besides the circumferential edge thereof.
